# EUROPEAN PATENT SPECIFICATION

(11) **EP 0 903 263 B1**
(45) Date of publication and mention of the grant of the patent: **19.03.2003**
(21) Application number: 97307429.7
(22) Date of filing: 23.09.1997
(51) Int. Cl.: B60R 13/08

(54) **Vehicle panel acoustic absorption liner and method of making the same**
Fahrzeugschall- Absorptionskarosserie und Verfahren zu ihrer Herstellung
Panneau de carrosserie d'absorption acoustique et procédé pour sa fabrication.

(43) Date of publication of application: 24.03.1999
(73) Proprietor: COLLINS & AIKMAN AUTOMOTIVE SYSTEMS LIMITED, St. Neots, Cambs. PE19 2ER (GB)
(72) Inventor: Beck, Raymond Paul, Radlett, Herts WD7 7HN (GB); Cooper, Philip Charles, Buckworth, Huntingdon, Cambridgeshire (GB); Figueira, Cindy, Huntingdon, Cambridgeshire PE19 3BG (GB); Jackson, Frank, Huntingdon, Cambridgeshire PE18 0DZ (GB)
(74) Representative: Barlow, Roy James

(56) References cited:
- EP-A- 0 141 415
- DE-A- 1 910 781
- DE-A- 3 324 038
- GB-A- 1 253 662
- GB-A- 2 227 449
- GB-A- 2 227 712
- US-A- 4 743 485
- US-A- 5 273 698

## Description

The present invention relates to an acoustic absorption liner for a panel of an automobile vehicle, and also to a method of making such a liner.

In the production of motor vehicles it is customary to provide acoustic absorption linings at various parts of the body panels, on the inside, in order to attenuate the audible sound and other vibrations of the bodywork.

One example of a prior form of bonnet liner involves the application to the bonnet panel of pressure-moulded cotton waste bound together with resin particles, typically phenol formaldehyde, and covering with a decorative fabric which holds the cotton waste in place. Another prior liner system involves a liner comprising a sheet of polyurethane foam impregnated with malamine pressed into the desired shape, and then having a fabric or film cover over the foam.

US 5,273,698 discloses a method of forming a cover member in accordance with the pre-characterising portion of claim 1.

In accordance with the present invention there is provided a method of forming an acoustic absorption liner for a vehicle body panel, comprising depositing reactants on a sheet, preferably of non-woven fabric, to react to form foamed polyurethane bonded directly to said sheet; characterised by forming the foam as a closed cell foam and converting to open cell foam by mechanical means.

Advantageously a second sheet may be applied over the body of polyurethane foam, the two sheets being in this case bonded directly to the polyurethane foam. The sheets may, for example, be of a non-woven fabric or of an extruded plastic film.

Preferably the thickness of the polyurethane foam is varied at different locations across the liner, in order to profile the liner to a desired shape.

Conveniently not all of the sheet need be covered with the liquid in that some areas can be left uncovered where no foam body material is needed.

Advantageously a second sheet may be immediately applied over the thus deposited polyurethane foam to bond to the foam.

Desirably the liner of sandwich construction is then shaped to the desired body panel before being applied to the panel.

In order that the present invention may more readily be understood the following description is given, merely by way of example, with reference to the accompanying drawing, in which the sole Figure is a cross-section of a liner for a motor vehicle bonnet, in accordance with the present invention.

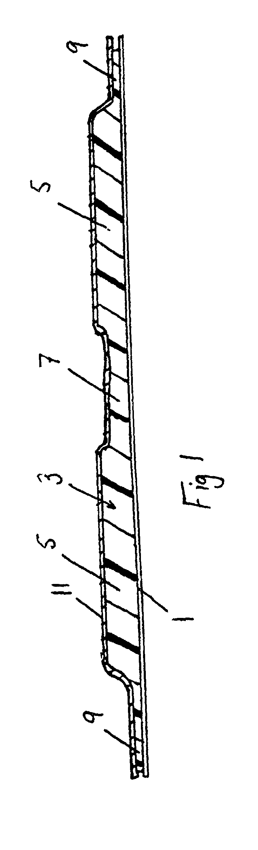

The bonnet liner shown in Figure 1 comprises a base sheet 1, preferably of a non-woven fabric, on which a mass of polyurethane foam 3 is deposited from a nozzle carried by a robot applicator which can be pre-programmed to follow a desired pattern over the base sheet 1 for mass production of liners of an appropriate configuration. The movement path of the dispenser nozzle, the rate of movement, or both, may be controlled in order to provide areas of differing thickness to the body of polyurethane foam formed on the sheet 1. For example, in Figure 1 there are two relatively thick foam areas 5 having a somewhat thinner foam area 7 between them, and the perimeter of the liner is bounded by two much thinner areas 9 of the polyurethane foam body.

If desired there may be regions in which there is no foam applied. While the illustration of Figure 1 does show a lack of foam at the very edge of the base sheet 1, it is envisaged that more extensive uncovered areas of the sheet 1 may be evident in alternative constructions in accordance with the present invention.

While the polyurethane foam on the base sheet 1 is reacting (given that polyurethane foam is formed by the rapid reaction of a polyol and an isocyanate which may take of the order of 30 seconds or more), the liner is completed by application of the optienal cover sheet 11 to form a second sheet of the sandwich in which the polyurethane foam defines the filling.

In order to be best suited to this process the foam is of closed cell construction and the acoustic properties are modified by covering the closed cell foam structure to an open cell form mechanically, preferably by subjecting the foam-coated sheet to vacuum to cause the closed cells to rupture, or by piercing the cast foam with needles which may or may not be hollow to communicate with gas injection means for bursting the cells.

Any suitable material may be used for the base sheet 1 and/or the cover sheet 11, and the material may be the same or different between the two sheets. For example one or both of them may be a plastic film.

During formation of the bonnet liner shown in Figure 1 it is possible for the sandwich component to be moulded to a desired concave or convex shape to match that of the bonnet or other body panel on which it is to be mounted.

Preferably at least the base sheet 1 and possibly also the cover sheet 11 will be paid out in the form of a continuous web and the reactants for the polyurethane foam will then be applied over the sheet to form the base of the panel, and where there are to be sheets on both faces of the finished acoustic absorption panel the placing of the second sheet in contact with the reactants will occur only after the reactants have been introduced on to the first sheet. For example, in such a twin-sheet construction the sheets may be paid out together one above the other but spaced apart vertically sufficiently to allow introduction of the polyurethane foam reactants on to the lower of the two sheets.

Alternatively the sheets may already have been pre-cut to match the desired shape of the vehicle body panel liner so that any scrap material of the base sheet 1 or of the cover sheet 11 can be recycled without having been contaminated with the reacting polyurethane foam. However, if desired, more extensive sheet configurations may be used and trimmed once the sandwich has been formed.

The areas 5, 7, 9 of different thickness may themselves have a varying thickness and/or varying density and can be formed either by causing the robot to drive the dispensing nozzle slowly over areas where thicker build-up of polyurethane foam is required and/or by causing the nozzle to pass more than once over the areas where the thicker build-up is needed.

As explained above, the nozzle will supply the polyol and the isocyanate which then react when they mix together in a matter of seconds. For this purpose it may be advantageous to arrange for the nozzle to discharge a mixed stream but for the constituents to come into contact with one another only at the nozzle orifice or very shortly beforehand.

The polyurethane applied will foam in contact with the base sheet 1 so the thickness on application may be less than the eventual thickness required, but naturally the variation in the thickness of the reacting liquid will bear a known relationship to the variation in thickness desired of the finished liner.

If desired the polyurethane may include a filler, to modify the density of the foam or for other purposes.

The panel liner in accordance with the present invention offers an improved acoustic absorption performance as compared with the prior art constructions of liner described above, and furthermore has improved resistance to water and/or oil which are frequently encountered in the vicinity of body panels of an automobile vehicle, particularly in the engine bay area. Furthermore, the liner can offer this improved acoustic absorption performance with a substantially reduced weight of liner, leading to a reduced overall weight of the finished vehicle, to achieve an object which is sought after by many modern motor vehicle designers.

The overall cost of production of the liner is advantageously reduced by such a construction.

If desired, the foam may be locally densified in order to improve the stiffness locally in the finished panel. This may be achieved by the incorporation of different fibres or fillers in the different parts of the foam, and/or it may be caused by other variations in the process.

## Claims

1. A method of forming an acoustic absorption liner for a vehicle body panel, comprising depositing reactants (3) on a sheet (1), preferably of non-woven fabric, to react to form foamed polyurethane bonded directly to said sheet; **characterised by**: forming the foam as a closed cell foam and converting to open cell foam by mechanical means.

2. A method according to claim 1 and comprising applying a second film (11), preferably of non-woven fabric, over the thus deposited polyurethane foam (3) to bond to the foam, the second sheet being preferably applied over the reactants before the reaction has finished, thereby bonding to the foam.

3. A method according to either of claims 1 and 2, wherein the reactants are dispensed from a nozzle driven by a robot over the first sheet, and the second sheet is applied over the reacting mixture immediately after the termination of the dispensing of the reactants.

4. A method according to claim 3 comprising choosing the movement path of the nozzle and/or the rate of movement of the nozzle along its path so as to dispense a build-up of foam reactants of varying thickness over the first sheet to define portions (5, 7, 9) of the finished liner with different thicknesses of polyurethane foam.

5. A method according to any one of claims 1 to 4 and comprising the step of shaping the sandwich after application of the second film sheet thereto.

6. A method according to any one of claims 1 to 5 and including the step of pre-cutting at least the first sheet to a desired shape before said deposition of the polyurethane foam reactants.

7. A method according to any one of claims 1 to 5, wherein the or each sheet is bonded to the polyurethane foam in the form of a continuous web and the foam and sheet combination is then cut to form the desired shape of liner.

8. A method according to any one of the preceding claims wherein said step of converting to open cell foam comprises subjecting the foam coated sheet to vacuum to cause the closed cells to rupture.

9. A method according to any one of claims 1 to 7, wherein said step of converting to open cell foam comprises piercing the cast foam with needles.

10. A method according to claim 9, wherein said needles are hollow to communicate with gas injection means for bursting the cells.

## Patentansprüche

1. Verfahren zur Ausbildung einer Schallabsorptionsauskleidung für eine Fahrzeugkörperplatte, aufweisend die Ablagerung von Reaktionsmitteln (3) auf einer Schicht (1), die vorzugsweise aus Vliesstoff hergestellt ist, um zur Bildung von Polyurethanschaum zu reagieren, der direkt mit der Schicht verbunden ist,
das **gekennzeichnet ist, durch**
Ausbildung des Schaums als geschlossenzelliger Schaum und Umformung zu offenzelligem Schaum mittels mechanischer Mittel.

2. Verfahren nach Anspruch 1, das die Auftragung einer zweiten Schicht (11), die vorzugsweise aus Vliesstoff hergestellt ist, über dem auf diese Art und Weise abgelagerten Polyurethanschaum (3) aufweist, zur Bindung an dem Schaum, wobei die zweite Schicht vorzugsweise über den Reaktionsmitteln aufgetragen wird, bevor die Reaktion beendet ist, wodurch sie mit Schaum verbunden wird.

3. Verfahren nach einem der Ansprüche 1 und 2, wobei die Reaktionsmittel aus einer Düse, die von einem Roboter über die erste Schicht gefahren wird, verteilt werden, und die zweite Schicht über das Reaktionsgemisch unverzüglich nach der Beendigung der Verteilung der Reaktionsmittel aufgebracht wird.

4. Verfahren nach Anspruch 3, das eine Auswahl des Laufweges der Düse und/oder der Bewegungsgeschwindigkeit der Düse entlang ihres Weges aufweist, um einen Aufbau von Schaum-Reaktionsmitteln unterschiedlicher Dicke über die erste Schicht zu verteilen, um Bereiche (5,7,9) der fertigen Auskleidung mit unterschiedlichen Polyurethanschaumdicken festzulegen.

5. Verfahren nach einem der Ansprüche 1 bis 4, das den Schritt der Formung des Schichtenverbundes nach dem Auftragen der zweiten Film-Schicht darauf aufweist.

6. Verfahren nach einem der Ansprüche 1 bis 5, das den Schritt zum Vorschneiden zumindest der ersten Schicht in eine gewünschte Form vor der Ablagerung der Polyurethanschaum-Reaktionsmittel aufweist.

7. Verfahren nach einem der Ansprüche 1 bis 5, wobei die oder jede Schicht mit dem Polyurethanschaum in der Art einer durchgehenden Bahn verbunden wird und dann die Schaum-Schichten-Kombination geschnitten wird, um die gewünschte Form der Auskleidung zu bilden.

8. Verfahren nach einem der vorangegangenen Ansprüche, wobei der Schritt zur Umformung in offenzelligen Schaum die Aussetzung der mit Schaum beschichteten Schicht einem Vakuum aufweist, um die geschlossenen Zellen zum Platzen zu zwingen.

9. Verfahren nach einem der Ansprüche 1 bis 7, wobei der Schritt zur Umformung in offenzelligen Schaum das Stechen des geformten Schaums mittels Nadeln aufweist.

10. Verfahren nach Anspruch 9, wobei die Nadeln hohl sind zur Verbindung mit einer Gasinjektionseinrichtung um die Zellen zu Platzen zu bringen.

## Revendications

1. Procédé de formation d'une garniture d'absorption acoustique pour un panneau de carrosserie de véhicule, comprenant le fait de déposer sur une feuille (1), de préférence en tissu non tissé, des réactifs (3) qui vont réagir pour former une mousse de polyuréthane directement liée à ladite feuille ;
**caractérisé par** le fait de former la mousse sous la forme d'une mousse à cellules fermées et de la convertir en une mousse à cellules ouvertes par un moyen mécanique.

2. Procédé selon la revendication 1 et comprenant le fait d'appliquer un deuxième film (11), de préférence en tissu non tissé, sur la mousse de polyuréthane ainsi déposée (3) pour le lier à la mousse, la deuxième feuille étant de préférence appliquée sur les réactifs avant que la réaction ne soit finie, adhérant de ce fait à la mousse.

3. Procédé selon la revendication 1 ou 2, dans lequel les réactifs sont délivrés par une buse entraînée par un robot sur la première feuille, et la deuxième feuille est appliquée sur le mélange de réactifs immédiatement après l'arrêt de l'application des réactifs.

4. Procédé selon la revendication 3 comprenant le fait de choisir le trajet de déplacement de la buse et/ou la vitesse de déplacement de la buse le long de son trajet de façon à délivrer un amas de réactifs pour mousse d'épaisseur variable sur la première feuille afin de définir des parties (5, 7, 9) de la garniture finie avec différentes épaisseurs de mousse de polyuréthane.

5. Procédé selon l'une quelconque des revendications 1 à 4 et comprenant l'étape consistant à façonner le sandwich après application de la deuxième feuille en film sur celui-ci.

6. Procédé selon l'une quelconque des revendications 1 à 5 et incluant l'étape consistant à pré-découper au moins la première feuille selon une forme souhaitée avant ledit dépôt des réactifs pour mousse de polyuréthane.

7. Procédé selon l'une quelconque des revendications 1 à 5, dans lequel la ou chaque feuille est liée à la mousse de polyuréthane sous forme d'une bande continue et la combinaison mousse-feuille est ensuite découpée pour donner la forme de garniture souhaitée.

8. Procédé selon l'une quelconque des revendications précédentes, dans lequel ladite étape de conversion en mousse à cellules ouvertes comprend le fait de soumettre au vide la feuille revêtue de mousse afin de provoquer la rupture des cellules fermées.

9. Procédé selon l'une quelconque des revendications 1 à 7, dans lequel ladite étape de conversion en mousse à cellules ouvertes comprend le fait de percer la mousse coulée avec des aiguilles.

10. Procédé selon la revendication 9, dans lequel lesdites aiguilles sont creuses afin de communiquer avec un moyen d'injection de gaz pour faire éclater les cellules.
